# EUROPEAN PATENT SPECIFICATION

(11) **EP 4 305 302 B1**
(45) Date of publication and mention of the grant of the patent: **16.10.2024**
(21) Application number: 22728542.6
(22) Date of filing: 10.05.2022
(51) Int. Cl.: F03D 80/80

(54) **WIND TURBINE**
WINDTURBINE
ÉOLIENNE

(30) Priority: 26.05.2021 EP 21175942
(43) Date of publication of application: 17.01.2024
(73) Proprietor: Siemens Gamesa Renewable Energy A/S, 7330 Brande (DK)
(72) Inventor: LUND, Mogens, 6920 Videbaek (DK); SØRENSEN, Ruben Bak, 7080 Børkop (DK)
(74) Representative: SGRE-Association
(86) International application number: PCT/EP2022/062656
(87) International publication number: WO 2022/248214

(56) References cited:
- EP-A1- 3 245 528
- EP-B1- 3 245 528
- WO-A1-2016/165720
- CN-A- 106 787 803
- CN-U- 210 927 123

## Description

### Background

A wind energy plant - for example an offshore wind park with many wind turbines - feeds output power into a transmission line. This is generally done in several stages. The output power contributions from the individual wind turbines are collectively fed into a transmission line.

In one relatively widespread approach, AC power from the wind turbine is transferred via multiple conductors - one for each phase - suspended from the nacelle and extending through the tower for connection (at a level near the tower base) to a transmission line. Conductors are usually made of copper on account of its high conductivity. In AC transmission, each conductor may be provided as a separate cable, or multiple conductors may be arranged in a single cable.

Alternatively, a DC cable can be used to transfer the wind turbine output power to a transmission line. In this approach, the wind turbine is equipped with a first power converter (in the nacelle) for converting the generator AC output to DC, a DC transmission cable extending from nacelle to tower base, and a second power converter (e.g. at or near the tower base) for converting the DC voltage to the desired export form (AC or DC). The first power converter can transform the generator AC power to a suitable DC voltage level for transmission in the tower cable to the second power converter. The advantage of implementing DC transmission through the tower is that more power can be transferred with the same cross-sectional conductor area, compared to AC transmission due to impedances, skin effects and electrical insulation requirements.

The DC transmission cable or "tower DC cable" is the link between the first power converter and the second power converter. Any DC transmission cable requires two conductors to complete the electrical circuit between both ends, i.e. between source and load. In the usual type of DC transmission cable, a positive conductor and a negative conductor are arranged in a co-axial configuration with a dielectric insulation layer separating the two conductors. Alternatively, a DC transmission link may have one cable for the outward current and a separate cable for the return current. A relevant prior art background document is for example EP 3 245 528 A1.

However, it is desirable to minimize losses in the tower cable. This can be done by transmitting at a higher DC voltage, resulting in reduced copper losses. However, a power converter with high DC output is generally more costly. Alternatively or in addition, losses can be reduced by increasing the available conductor area in the DC tower cable, since the resistance of an electrical conductor is inversely proportional to its cross-sectional area. However, DC cables with thicker conductors require more copper and are more expensive than small cross-sectional area conductors.

It is therefore an object of the invention to provide an improved way of transmitting DC power through a wind turbine This object is achieved by the wind turbine of claim 1; and by the method of claim 12 of transmitting output power of a wind turbine generator to a transmission link.

### Description

The wind turbine in the context of the invention shall be understood to comprise a generator that is driven by an aerodynamic rotor. Components of the wind turbine may be assumed to be protected by a nacelle that is mounted on top of a tower. The various regions of the wind turbine (rotor blades, hub, nacelle, tower etc.) may be assumed to each comprise an earthing connection to electrical ground, for example earthing connections that fulfil the relevant requirements. The tower shall be understood to be mounted on a support structure such as a concrete foundation, a transition piece, a monopile, a jacket foundation etc., and it may be assumed that any tower earth connection leads via the support structure to electrical earth.

The wind turbine further comprises a first power converter arranged in the nacelle and configured to convert the generator output power to a DC voltage, and a second power converter arranged at the base of the tower and configured to convert the wind turbine DC power to a form suitable for a transmission link to which the wind turbine is connected.

According to the invention, the wind turbine also comprises a DC arrangement in which a DC transmission link or cable is connected between the first power converter and the second power converter. This DC cable extends from the top of the tower to the tower base and may be referred to in the following as the "DC tower cable". The DC tower cable can comprise a single conductor, or it can comprise two electrically isolated conductors (e.g. a co-axial cable with an inner conductor separated from an enclosing outer conductor by a dielectric layer).

The inventive wind turbine is characterized in that a first current path is provided between the power converters through the DC tower cable by connecting a first terminal of the first power converter to the DC tower cable at its upper end, and a first terminal of the second power converter is connected to the DC tower cable at its lower end. Furthermore, a second current path is provided between the power converters through the electrically grounded metal of the tower by electrically connecting the second terminal of the first power converter to earth, and by electrically connecting the second terminal of the second power converter to earth.

It shall be understood that the first and second terminals of the first power converter are the terminal pair at the DC output side. Similarly, it shall be understood that the first and second terminals of the second power converter are the terminal pair at the DC input side.

A wind turbine tower generally has a high metal content in order to meet structural requirements. For example, a tower can be made primarily of stacked steel sections. The invention is based on the insight that the metal of the tower can provide a path for DC current in a DC circuit, and the inventors have realised that it is not necessary for the DC tower cable to transport current in both outward and return directions, but instead the entire DC tower cable (e.g. both conductors of a co-axial cable) can be used to transport current in one direction only, and that the grounded tower metal can carry DC current in the other direction. With the inventive approach to the DC link between nacelle and tower base, it is still safe to touch any earthed tower metal, since the potential difference between the tower metal and earth is zero.

An advantage of the invention is that one part of the current loop between the power converters can be provided by the DC tower cable, and the other part can be provided by the tower, thereby completing the electric circuit. For example, the DC tower cable can be used to carry the output current (positive with respect to ground), and the grounded tower metal is used to carry the return current (at zero potential). The magnitude of the return current is essentially the same as the magnitude of the output current. Alternatively, the DC tower cable can be used to carry the return current (negative with respect to ground), and the grounded tower metal is used to carry the output current (at zero potential). In this way, the total area of the conductor(s) of the DC tower cable is exploited to transport current in only one direction. A significant advantage of this novel approach is that cable losses of the DC tower cable can be halved by doubling the effective cable cross-sectional area, compared to the conventional approach in which a DC tower cable has one conductor for the output current and another conductor for the return current.

According to the invention, the method of transferring output power of a wind turbine generator through the wind turbine tower comprises the steps of providing a first power converter to convert the generator output power to a DC output voltage; providing a second power converter to receive a DC input voltage; and arranging a DC transmission link to extend essentially vertically through the wind turbine tower between the power converters. The DC transmission link may comprise a cable enclosing a single conductor. Alternatively, the DC transmission link may be a coaxial cable, for example an already installed cable, so that both conductors of the coaxial cable are used to carry current in one direction. The inventive method is characterized by the steps of connecting a first terminal of the first power converter to a first terminal of the second power converter through the DC tower cable, and connecting the second terminals of the power converters to the wind turbine's ground connection so that the tower metal provides one current "leg" of the DC circuit.

The inventive method can be used to upgrade an already existing wind turbine that is equipped with two such power converters and a DC tower cable with two conductors. The converter terminals can be connected as above, so that both conductors of the DC tower cable now collectively provide one current path, and the tower metal (via the earthing connector) now provides the other current path.

Particularly advantageous embodiments and features of the invention are given by the dependent claims, as revealed in the following description. Features of different claim categories may be combined as appropriate to give further embodiments not described herein.

A wind turbine can be installed on land or offshore. Such a wind turbine may be part of a wind park, or can be a stand-alone wind energy plant. In the following, without restricting the invention in any way, it may be assumed that the wind turbine generator is constructed to generate AC power, for example a variable-speed wind turbine with a doubly-fed induction generator.

The power converters can be realised in any suitable manner, for example the generator-side rectifier may be realised as a voltage source converter (VSC). Depending on the transmission line leading from the wind turbine, the second power converter can be any suitable DC-AC inverter, as will be known to the skilled person.

In an embodiment of the invention, an electrolyzer unit is connected to the second power converter. The electrolyzer unit is configured to generate hydrogen and oxygen from water, wherein the electrolyzer unit is powered by the generator of the wind turbine.

Advantageously, the second power converter is configured as a DC-DC converter. Thus, the second power converter is advantageously configured such that it converts the DC input power received from the first power converter into a direct current with a voltage level that is optimum for the electrolyzer unit.

The first power converter can be configured to convert the generator output AC power to a low, medium or high DC voltage. As used in the context of the invention and in view of the capabilities of wind energy plants being deployed at present, "low", "medium" and "high" DC voltage levels shall be understood to be voltage levels in the order of 1.5 kV, 35 kV and 400 kV respectively. These values are merely of an exemplary nature and, as the skilled person is aware, such quantities are relative and may be re-interpreted according to technological developments.

In the following, a power converter may be referred to simply as a "converter". The expressions "first power converter", "first converter", "upper converter" and "generator-side converter" may be used interchangeably to refer to the module at the top of the tower (usually installed in the nacelle) that performs AC-DC conversion; similarly the expressions "second power converter", "second converter", "lower converter" and "grid-side converter" may be used interchangeably to refer to the module at the base of the tower that performs DC-AC conversion.

The expression "conductive tower path" refers to the path that would be taken by electrical current through the conducting metal of the tower. In the case of a tower made of metal, for example from stacked steel sections, the "conductive tower path" can be the entire tower structure. In the case of a tower that comprises a concrete structure, the "conductive tower path" refers to the electrically conductive reinforcing elements embedded in the concrete structure, e.g. a mesh of reinforcing bars ("rebar"). The terms "ground connection", "earthing connection", "tower ground" and "tower earth" may all be used interchangeably in the following.

In a preferred embodiment of the invention, the DC output current from the first converter flows through the DC tower cable. In such an embodiment of the invention, the path of the return current is through the conductive tower metal from the negative output terminal of the second converter to the negative input terminal of the first converter.

In an alternative embodiment, the DC output current from the first converter flows through the conductive tower path, and the return current flows through the DC tower cable.

A wind turbine of the type mentioned above, i.e. a VSIG used in an offshore wind park, may have a rated power output in the order of several MW. In a preferred embodiment of the invention, the first power converter is configured to output a DC voltage of at least 1 kV. The conductors of the DC cable are preferably realised to collectively carry an output current of at least 14 kA.

The earthing connection of a wind turbine tower can be realised in the usual manner, as will be known to the skilled person, for example by ensuring equipotential bonding to all metal parts. Similarly, the second terminal of the generator-side converter can be connected to the nacelle earthing system in any suitable manner; and the second terminal of the grid-side converter can be connected to a converter housing earth in any suitable manner. For example, the second terminal of the generator-side converter can be connected to an earthing conductor of the nacelle, since any such earthing conductor is also electrically connected to the tower earthing system as part of the wind turbine lightning protection system (LPS).

There are several economic benefits to the installation described above: the DC tower cable can be lighter and cheaper, since only one conductor is necessary for a single current path; a more economical generator-side converter can be deployed since the ability of the DC tower cable to transport a higher current means that the output voltage of the generator-side converter can be lower than would be required in a comparable prior art wind turbine. A wind park can comprise any number of wind turbines equipped as described above, for example one hundred or more, so that the savings and benefits are even more relevant.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figures 1 - 3 show exemplary embodiments of the invention;
Figure 4 shows a prior art configuration.

In the diagrams, like numbers refer to like objects throughout. Objects in the diagrams are not necessarily drawn to scale.

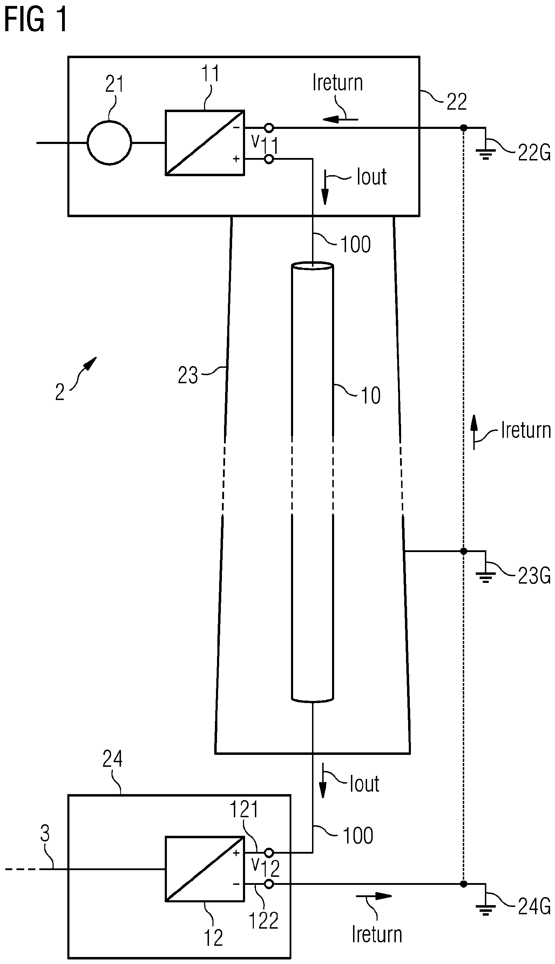

Figure 1 is a simplified schematic showing the principle underlying the invention. The diagram shows a wind turbine 2 with a generator 21 and a first converter 11 at the level of the nacelle 22, which is mounted on top of a tower 23. An aerodynamic rotor (not shown) turns a rotor shaft of the generator 21. The AC power thus generated is converted to DC power by the generator-side converter 11. A DC cable 10 extends from the first converter 11 to a second converter 12 at the base of the tower 23.

The tower 23 in this exemplary embodiment is made primarily of metal, for example from one or more essentially cylindrical steel tower sections. The tower 23 is grounded in the usual manner, for example by a robust metal connection 23G between the tower and electrical ground G. For example, a metal tower of an offshore wind turbine is bolted or welded to a grounded steel monopile or jacket foundation. The tower's earth connection 23G leads to ground as indicated by the standard earth symbol, and may be realised by appropriate assemblies at one or more suitable location(s) in the tower structure. The nacelle 22 is also grounded by connecting any metal components to a suitable grounding network 22G as will be known to the skilled person. Similarly, an earthing connector 24G connects the second power converter 12 and its housing 24 to earth as will be known to the skilled person.

The first converter 11 converts the generator AC power to a DC voltage V₁₁ at a low, medium or high level depending on the converter's configuration. The first converter 11 has a positive output terminal 111 (labelled "+") and a negative input terminal 112 (labelled "-").

The second converter 12 converts the incoming DC voltage V₁₂ to an output voltage, which may be DC or AC, depending on the type of export link 3 connecting that wind turbine 2 to a point of common connection. The export link 3 may be a HVDC transmission line ("HVDC link"), for example, connecting a wind farm to a substation such as a transmission substation, a distributor substation, etc. Equally, the export link can transport AC power. The second converter 12 has a positive input terminal 121 (labelled "+") and a negative output terminal 122 (labelled "-").

A DC tower cable 10 links the converters 11, 12. In this exemplary embodiment, the DC tower cable 10 comprises a single conductor 100. One end of the conductor 100 is connected to the positive output terminal 111 of the first converter 11 and its other end is connected to the positive input terminal 121 of the second converter 12, and this single conductor 100 transports the output DC current Iₒᵤₜ. To complete the electrical circuit, the negative input terminal of the first converter 11 is connected to ground (through the nacelle ground connection 22G) and the negative output terminal 122 of the second power converter 12 is connected to ground (through the housing ground connection 24G), and because all grounding connectors 22G, 23G, 24G are connected, the tower metal provides a path for the return current Iᵣₑₜᵤᵣₙ.

It shall be understood that the various earthing connectors 22G, 23G, 24G are usually physically independent, but are essentially linked by virtue of their connection to electrical ground. This concept is indicated by the dotted line for the return current path Iᵣₑₜᵤᵣₙ.

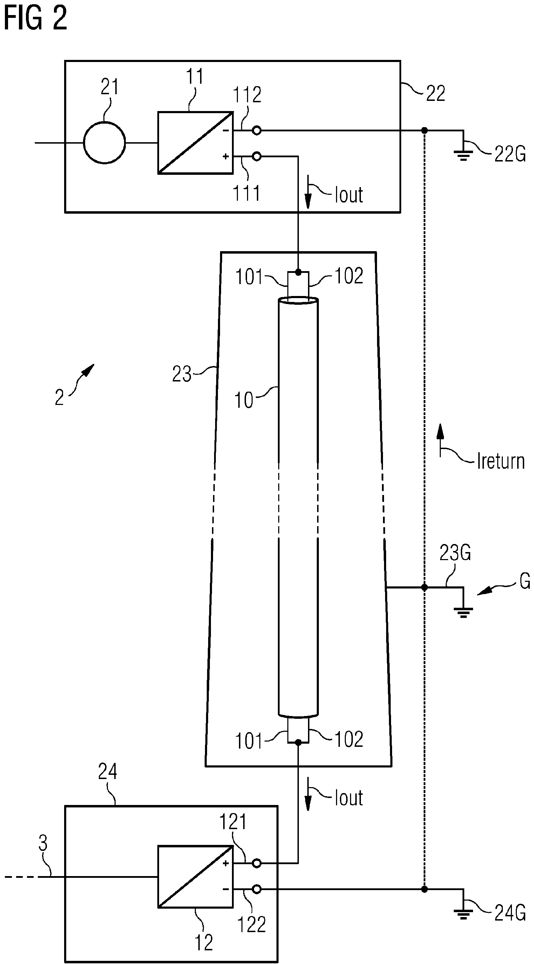

Figure 2 is a simplified schematic showing an alternative embodiment of the invention. In this case, the DC tower cable 10 is a co-axial cable with two conductors 101, 102 separated by an insulating dielectric. In this exemplary embodiment of the invention, each conductor 101, 102 of the DC cable 10 is connected at one end to the positive output terminal 111 of the first converter 11 and at the other end to the positive input terminal 121 of the second converter 12. In this way, the total cross-sectional area of both conductors 101, 102 is available to the output DC current Iₒᵤₜ. To complete the electrical circuit, the negative input terminal of the first converter 11 and the negative output terminal 122 of the second power converter 12 are connected to tower ground 23G, so that a path is available for the return current Iᵣₑₜᵤᵣₙ.

In this embodiment, the total combined area of both conductors 101, 102 is used to carry the output DC current Iₒᵤₜ. This approach to implementing a co-axial cable significantly increases the efficiency of the DC connection. Compared to a prior art approach, in which only one conductor is available to carry the output DC current Iₒᵤₜ, the cable losses are effectively halved.

As described above, both conductors 101, 102 are also connected at the other end of the DC cable 10 to the second converter 12. The other terminal 112 of the DC output stage of the first power converter 11 and the other terminal 12 of the DC input stage of the second power converter 12 are connected as described in Figure 1 to provide a path through the tower ground connector for the return current, thereby completing the DC circuit.

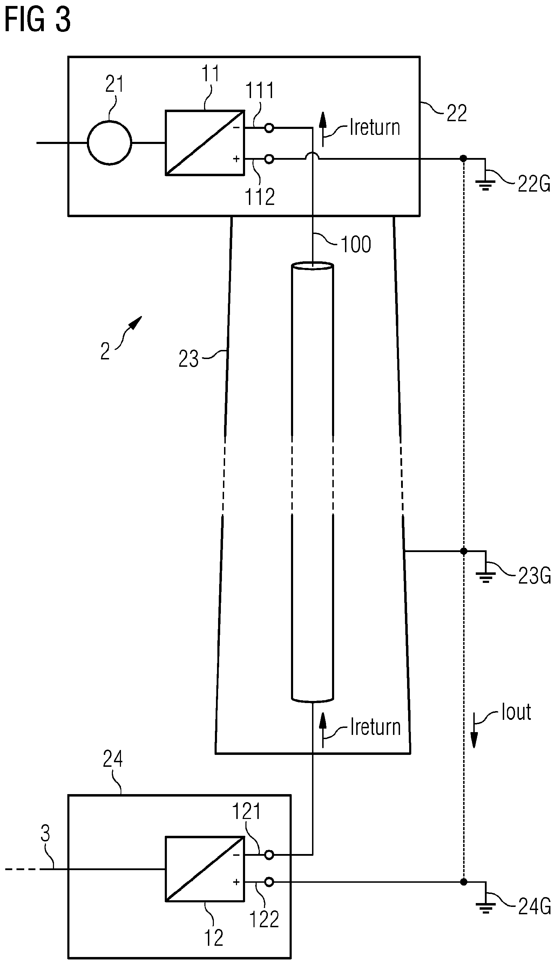

Figure 3 shows an alternative realisation of the invention. In this exemplary embodiment, the output current Iₒᵤₜ is negative with respect to ground. The DC tower cable conductor 100 is connected at one end to the negative output terminal 122 of the second converter 12 and at the other end to the negative input terminal 112 of the first converter 11. In this way, the conductor 100 carries the negative return current Iᵣₑₜᵤᵣₙ. The positive output terminal 112 of the first converter 11 and the positive input terminal 121 of the second power converter 12 are grounded as described above, so that tower metal provides a path for the output current Iₒᵤₜ.

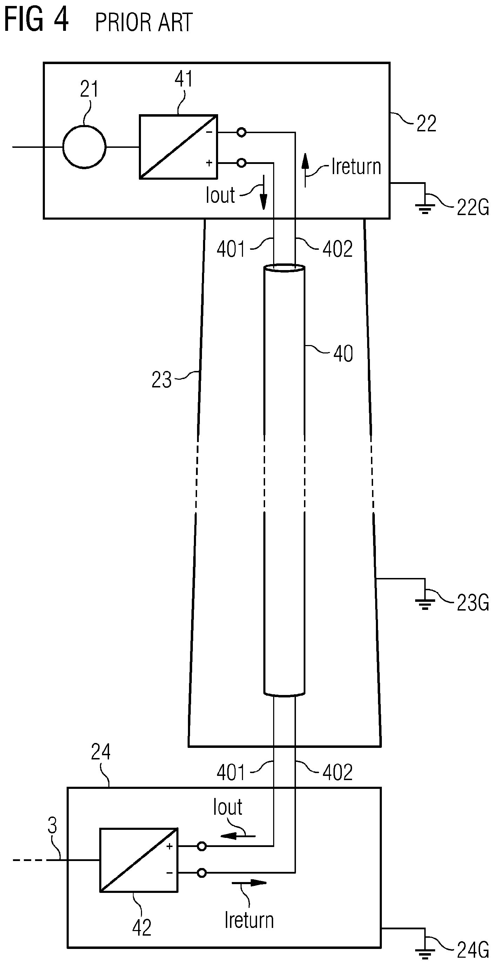

Figure 4 shows a prior art system 4. Here also, electrical power from the generator 21 is transferred by means of a first converter 41 and a coaxial DC tower cable 40 to a second converter 42 at the base of the tower 23. In the known configuration, one DC cable conductor 401 is connected between the positive output terminal 411 of the first converter 41 and the positive input terminal 421 of the second converter 42; the other DC cable conductor 402 is connected between the negative input terminal 412 of the first converter 41 and the negative output terminal 422 of the second converter 42. As explained above, the cross-sectional area of a single conductor 401, 402 places a constraint on the magnitude of the current that it can transport, in this case the cross-sectional area of a conductor is a physical constraint that limits the DC output current Iₒᵤₜ that can be output by the first power converter 41. In order to be able to export more power, it is necessary to provide a generator-side converter 41 capable of higher voltage output and/or to provide a thicker conductor 401, 402 in the DC cable 40. However, both solutions add significantly to the overall expense. In the case of a wind farm with tens or even hundreds of wind turbines, the added expense may be prohibitive.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements.

## Claims

1. A wind turbine (2) comprising
- a generator (21) driven by an aerodynamic rotor;
- a first power converter (11) arranged in a nacelle (22) supported by an electrically grounded tower (23);
- a second power converter (12) arranged at the base of the tower (23);
- a DC transmission link (10) extending through the wind turbine tower (23) and connected between the first power converter (11) and the second power converter (12);
**characterized by**
- a first current path between the power converters (11, 12) through the DC transmission link (10); and
- a second current path between the power converters (11, 12) through electrically grounded metal of the tower (23) .

2. A wind turbine according to claim 1, wherein the generator (21) is configured to output AC power, and the first power converter (11) is an AC-DC converter.

3. A wind turbine according to any of the preceding claims, wherein the power converters (11, 12) are connected to provide a current path though the DC transmission link (10) for the DC output current (Iₒᵤₜ) from the first power converter (11) to the second power converter (12).

4. A wind turbine according to claim 3, wherein the current path of the return current (Iᵣₑₜᵤᵣₙ) from the second power converter (12) to the first power converter (11) is through the electrically grounded metal of the tower (23).

5. A wind turbine according to any of the preceding claims, wherein the power converters (11, 12) are connected to provide a current path though the DC transmission link (10) for the DC return current (Iᵣₑₜᵤᵣₙ) from the second power converter (12) to the first power converter (11).

6. A wind turbine according to claim 5, wherein the current path of the DC output current (Iₒᵤₜ) of the first power converter (11) to the second power converter (12) is through the electrically grounded metal of the tower (23).

7. A wind turbine according to any of the preceding claims, with a rated output power in the order of several MW, wherein
- the first power converter (11) is configured to output a voltage in the order of 1 - 2 kV DC; and
- the conductors (101, 102) of the DC cable (10) are realised to collectively carry an output current (Iₒᵤₜ) in the order of 10 - 20 kA.

8. A wind turbine according to any of the preceding claims, wherein the tower (23) comprises one or more essentially cylindrical metal tower sections.

9. A wind turbine according to any of the preceding claims, wherein the tower (23) comprises a reinforced concrete section.

10. A wind turbine according to any of the preceding claims, wherein the DC transmission link (10) comprises a single conductor (100).

11. A wind energy plant comprising a plurality of wind turbines (2) according to any of claims 1 to 10.

12. A method of connecting a DC transmission link (10) in the tower (23) of a wind turbine (2), which method comprises the steps of
- arranging a first power converter (11) in a nacelle (22) supported by the tower (23);
- arranging a second power converter (12) at the base of the tower (23);
- arranging the DC transmission link (10) to extend through the wind turbine tower (23);
- providing an earthing connection (23G) to connect the tower (23) to electrical ground (G);
which method is **characterized by**
connecting the power converters (11, 12), the DC transmission link (10) and the tower earthing connection (23G) to define
- a first current path between the power converters (11, 12) through the DC transmission link (10); and
- a second current path between the power converters (11, 12) through electrically grounded metal of the tower (23) .

13. A method according to claim 12, comprising a step of connecting the power converters (11, 12) such that the DC output current (Iₒᵤₜ) from the first power converter (11) is carried by the DC transmission link (10).

14. A method according to claim 12, comprising a step of connecting the power converters (11, 12) such that the DC return current (Iᵣₑₜᵤᵣₙ) to the first power converter (11) is carried by the DC transmission link (10).

## Patentansprüche

1. Windturbine (2), die Folgendes umfasst:
- einen Generator (21), der von einem aerodynamischen Rotor angetrieben wird;
- einen ersten Leistungswandler (11), der in einer Gondel (22) angeordnet ist, die von einem elektrisch geerdeten Turm (23) getragen wird;
- einen zweiten Leistungswandler (12), der an der Basis des Turms (23) angeordnet ist;
- einen Gleichspannungs-Zwischenkreis (10), der sich durch den Turm (23) der Windturbine erstreckt und zwischen dem ersten Leistungswandler (11) und dem zweiten Leistungswandler (12) angeschlossen ist;
**gekennzeichnet durch**
- einen ersten Strompfad zwischen den Leistungswandlern (11, 12) über den Gleichspannungs-Zwischenkreis (10); und
- einen zweiten Strompfad zwischen den Leistungswandlern (11, 12) durch elektrisch geerdetes Metall des Turms (23).

2. Windturbine nach Anspruch 1, wobei der Generator (21) ausgebildet ist, um Wechselstrom auszugeben, und der erste Leistungswandler (11) ein Wechselstrom-Gleichstrom-Wandler ist.

3. Windturbine nach einem der vorhergehenden Ansprüche, wobei die Leistungswandler (11, 12) verbunden sind, um einen Strompfad durch den Gleichspannungs-Zwischenkreis (10) für den DC-Ausgangsstrom (Iₒᵤₜ) von dem ersten Leistungswandler (11) zu dem zweiten Leistungswandler (12) bereitzustellen.

4. Windturbine nach Anspruch 3, wobei der Strompfad des Rückstroms (Iᵣₑₜᵤᵣₙ) von dem zweiten Leistungswandler (12) zu dem ersten Leistungswandler (11) durch das elektrisch geerdete Metall des Turms (23) verläuft.

5. Windturbine nach einem der vorhergehenden Ansprüche, wobei die Leistungswandler (11, 12) verbunden sind, um einen Strompfad durch den Gleichspannungs-Zwischenkreis (10) für den DC-Rückstrom (Iᵣₑₜᵤᵣₙ) von dem zweiten Leistungswandler (12) zu dem ersten Leistungswandler (11) bereitzustellen.

6. Windturbine nach Anspruch 5, wobei der Strompfad des DC-Ausgangsstroms (Iₒᵤₜ) des ersten Leistungswandlers (11) zum zweiten Leistungswandler (12) durch das elektrisch geerdete Metall des Turms (23) verläuft.

7. Windturbine nach einem der vorhergehenden Ansprüche, mit einer Nennausgangsleistung in der Größenordnung von mehreren MW, wobei
- der erste Leistungswandler (11) so ausgebildet ist, dass er eine Spannung in der Größenordnung von 1 - 2 kV DC ausgibt; und
- die Leiter (101, 102) des Gleichstromkabels (10) so ausgeführt sind, dass sie gemeinsam einen Ausgangsstrom (Iₒᵤₜ) in der Größenordnung von 10 - 20 kA ausgeben können.

8. Windturbine nach einem der vorhergehenden Ansprüche, wobei der Turm (23) einen oder mehrere im Wesentlichen zylindrische Metallturmabschnitte umfasst.

9. Windturbine nach einem der vorhergehenden Ansprüche, wobei der Turm (23) einen Stahlbetonabschnitt umfasst.

10. Windturbine nach einem der vorhergehenden Ansprüche, wobei der Gleichspannungs-Zwischenkreis (10) einen einzelnen Leiter (100) umfasst.

11. Windenergieanlage, die eine Vielzahl von Windturbinen (2) nach einem der Ansprüche 1 bis 10 umfasst.

12. Verfahren zum Verbinden eines Gleichspannungs-Zwischenkreises (10) im Turm (23) einer Windturbine (2), wobei das Verfahren die folgenden Schritte umfasst:
- Anordnen eines ersten Leistungswandlers (11) in einer von dem Turm (23) getragenen Gondel (22);
- Anordnen eines zweiten Leistungswandlers (12) an der Basis des Turms (23);
- Anordnen des Gleichspannungs-Zwischenkreises (10) so, dass er sich durch den Turm der Windturbine (23) erstreckt;
- Bereitstellen eines Erdungsanschlusses (23G), um den Turm (23) mit der elektrischen Erde (G) zu verbinden;
wobei das Verfahren durch Folgendes gekennzeichnet ist:
Verbinden der Leistungswandler (11, 12), des Gleichspannungs-Zwischenkreises (10) und des Turmerdungsanschlusses (23G), um Folgendes zu definieren:
- einen ersten Strompfad zwischen den Leistungswandlern (11, 12) über den Gleichspannungs-Zwischenkreis (10); und
- einen zweiten Strompfad zwischen den Leistungswandlern (11, 12) durch elektrisch geerdetes Metall des Turms (23).

13. Verfahren nach Anspruch 12, das folgenden Schritt umfasst: Verbinden der Leistungswandler (11, 12) in einer Weise, dass der DC-Ausgangsstrom (Iₒᵤₜ) des ersten Leistungswandlers (11) durch den Gleichspannungs-Zwischenkreis (10) geleitet wird.

14. Verfahren nach Anspruch 12, das folgenden Schritt umfasst: Verbinden der Leistungswandler (11, 12) in einer Weise, dass der Gleichspannungs-Zwischenkreis (10) den Gleichstrom-Rückstrom (Iᵣₑₜᵤᵣₙ) zum ersten Leistungswandler (11) führt.

## Revendications

1. Éolienne (2) comprenant
- un générateur (21) entraîné par un rotor aérodynamique ;
- un premier convertisseur de puissance (11) agencé dans une nacelle (22) supportée par une tour électriquement mise à la terre (23) ;
- un second convertisseur de puissance (12) agencé au niveau de la base de la tour (23) ;
- une liaison de transmission CC (10) s'étendant à travers la tour d'éolienne (23) et connectée entre le premier convertisseur de puissance (11) et le second convertisseur de puissance (12) ;
**caractérisée par**
- un premier chemin de courant entre les convertisseurs de puissance (11, 12) à travers la liaison de transmission CC (10) ; et
- un second chemin de courant entre les convertisseurs de puissance (11, 12) à travers le métal électriquement mis à la terre de la tour (23).

2. Éolienne selon la revendication 1, dans laquelle le générateur (21) est configuré pour délivrer en sortie de la puissance CA, et le premier convertisseur de puissance (11) est un convertisseur CA-CC.

3. Éolienne selon l'une des revendications précédentes, dans laquelle les convertisseurs de puissance (11, 12) sont connectés pour fournir un chemin de courant à travers la liaison de transmission CC (10) pour le courant de sortie CC (Iₒᵤₜ) du premier convertisseur de puissance (11) au second convertisseur de puissance (12).

4. Éolienne selon la revendication 3, dans laquelle le chemin de courant du courant de retour (Iᵣₑₜᵤᵣₙ) du second convertisseur de puissance (12) au premier convertisseur de puissance (11) passe par le métal électriquement mis à la terre de la tour (23).

5. Éolienne selon l'une des revendications précédentes, dans laquelle les convertisseurs de puissance (11, 12) sont connectés pour fournir un chemin de courant à travers la liaison de transmission CC (10) pour le courant de retour CC (Iᵣₑₜᵤᵣₙ) du second convertisseur de puissance (12) au premier convertisseur de puissance (11).

6. Éolienne selon la revendication 5, dans laquelle le chemin de courant du courant de sortie CC (Iₒᵤₜ) du premier convertisseur de puissance (11) au second convertisseur de puissance (12) passe par le métal électriquement mis à la terre de la tour (23).

7. Éolienne selon l'une des revendications précédentes, avec une puissance de sortie nominale de l'ordre de plusieurs MW, dans laquelle
- le premier convertisseur de puissance (11) est configuré pour délivrer en sortie une tension de l'ordre de 1 à 2 kV CC ; et
- les conducteurs (101, 102) du câble CC (10) sont réalisés pour transporter collectivement un courant de sortie (Iₒᵤₜ) de l'ordre de 10 à 20 kA.

8. Éolienne selon l'une des revendications précédentes, dans laquelle la tour (23) comprend une ou plusieurs sections de tour métalliques essentiellement cylindriques.

9. Éolienne selon l'une des revendications précédentes, dans laquelle la tour (23) comprend une section en béton armé.

10. Éolienne selon l'une des revendications précédentes, dans laquelle la liaison de transmission CC (10) comprend un seul conducteur (100).

11. Centrale d'énergie éolienne comprenant une pluralité d'éoliennes (2) selon l'une des revendications 1 à 10.

12. Procédé de connexion d'une liaison de transmission CC (10) dans la tour (23) d'une éolienne (2), lequel procédé comprend les étapes de :
- agencement d'un premier convertisseur de puissance (11) dans une nacelle (22) supportée par la tour (23) ;
- agencement d'un second convertisseur de puissance (12) au niveau de la base de la tour (23) ;
- agencement de la liaison de transmission CC (10) pour qu'elle s'étende à travers la tour d'éolienne (23) ;
- fourniture d'une connexion de mise à la terre (23G) pour connecter la tour (23) à la terre électrique (G) ;
lequel procédé est **caractérisé par**
la connexion des convertisseurs de puissance (11, 12), de la liaison de transmission CC (10) et de la connexion de mise à la terre de la tour (23G) pour définir
- un premier chemin de courant entre les convertisseurs de puissance (11, 12) à travers la liaison de transmission CC (10) ; et
- un second chemin de courant entre les convertisseurs de puissance (11, 12) à travers le métal électriquement mis à la terre de la tour (23).

13. Procédé selon la revendication 12, comprenant une étape de connexion des convertisseurs de puissance (11, 12) de sorte que le courant de sortie CC (Iₒᵤₜ) du premier convertisseur de puissance (11) soit transporté par la liaison de transmission CC (10) .

14. Procédé selon la revendication 12, comprenant une étape de connexion des convertisseurs de puissance (11, 12) de sorte que le courant de retour CC (Iᵣₑₜᵤᵣₙ) vers le premier convertisseur de puissance (11) soit transporté par la liaison de transmission CC (10) .
